# EUROPEAN PATENT SPECIFICATION

(11) **EP 4 575 565 B1**
(45) Date of publication and mention of the grant of the patent: **19.08.2026**
(21) Application number: 24205825.3
(22) Date of filing: 10.10.2024
(51) Int. Cl.: G01S 7/481, G01S 7/483, G01S 7/491, G01S 17/87

(54) **DUAL-OPTICAL FUSION LASER RANGEFINDER**
LASERENTFERNUNGSMESSER MIT DOPPELTER OPTISCHER FUSION
TÉLÉMÈTRE LASER À FUSION À DOUBLE OPTIQUE

(30) Priority: 20.12.2023 CN 202311758910
(43) Date of publication of application: 25.06.2025
(73) Proprietor: Sndway Technology (Guangdong) Co., Ltd., Dongguan Guangdong (CN)
(72) Inventor: XU, Xiaojian, Dongguan, Guangdong (CN); HE, Gang, Dongguan, Guangdong (CN)
(74) Representative: Herrero & Asociados, S.L.

(56) References cited:
- WO-A2-2019/052618
- CN-A- 110 199 202
- CN-A- 111 812 665
- CN-U- 205 562 801
- CN-U- 208 704 711
- CN-U- 211 505 878
- CN-U- 220 137 388

## Description

### TECHNICAL FIELD

The disclosure relates to the field of laser measurement technologies, and particularly to a dual-optical fusion laser rangefinder. The invention is set out in the appended set of claims.

### BACKGROUND

Existing laser rangefinders include pulse laser rangefinders and phase laser rangefinders. The pulse laser rangefinders can measure distances from 3 meter (m) to 5000 m, but their measurement accuracy is not high, with an error of ±1 m at 100 m, and the error tends to increase as the measurement distance becomes longer. The phase laser rangefinders can measure distances from 0.2 m to 200 m and offer high measurement accuracy, with an error of ±2 millimeter (mm) at 10 m. However, as with the pulse laser rangefinders, the error of the phase laser rangefinders also tends to increase with the measurement distance becoming longer, and the phase laser rangefinders cannot measure as far as the pulse laser rangefinders. Currently, there is no rangefinder on the market that can measure long distances while also ensuring millimeter-level accuracy.

CN208704711U relates to a range finding technical field, concretely relates to compound distance measuring equipment, through setting up the optics sighting device that looks in the distance, the laser emission device, signal receiver and signal processing device, when finding range, after definite target that awaits measuring, carry out the range finding of quick laser pulse in order to obtain a measuring distance to the target that awaits measuring earlier, and adopt continuous laser pulse to carry out the pulse range finding or adopt modulated laser to carry out the phase place range finding based on this measuring distance, and then when finding range, no longer need frequently switch distance measuring equipment, thereby the complexity of using has effectively been reduced, and the execution efficiency of the task of finding range has been improved.

WO2019052618A2 relates to a hand-held laser distance-measuring device configured for making measurements in at least four different directions, preferably in one plane, and based on these measurements obtain distance information comprising: the distance between two reference points on a first axis, the distance between two reference points on a second axis and/or the distance from a predetermined point on the device to one or more of the four reference points and optionally also to further reference points. The laser distance-measuring device has a housing comprising at least one laser emitting unit, configured to emit at least one laser beam in the at least four different directions, at least one laser detecting unit, configured to detect reflected laser beams emitted in the at least four different directions, a processing unit configured to receive information from the at least one laser emitting unit and the at least one laser detecting unit and process the information to obtain the distance information, a display unit arranged on/in a surface of the housing, configured for displaying the distance information from the processing unit and user interacting means.

CN111812665A discloses a pulse and phase integrated laser distance measurement device. The device comprises a control unit, a pulse driving unit, a laser emitter, a laser receiver, a beam splitter prism, a display unit, an ocular lens, a photoelectric converter, an operational amplifier A, a PIN detector, an operational amplifier B, a double-path high-speed comparator and a pulse timing unit. A laser generator emits pulse laser, the pulse laser is reflected to the beam splitter prism through a to-be-measured target, one path is incident to the ocular lens, the other path is incident to the laser receiver, and the photoelectric converter is connected with the double-path high-speed comparator through the operational amplifier A; the laser generator emits pulse laser to be incident to the PIN detector, the PIN detector is connected with the double-path high-speed comparator through the operational amplifier B, the double-path high-speed comparator is connected with the pulse timing unit, and the pulse timing unit is connected with the control unit. A pulse distance measurement and phase distance measurement combined mode is adopted, so that the product can accurately measure far and near distances and is convenient to operate and simple to use.

CN205562801U discloses a high-precision laser distancer, which comprises a housing, install control circuit board in the inner chamber of casing, and the casing top is equipped with the laser - firing port who is connected with control circuit board electricity, the upper surface of casing is equipped with the display screen, and the below of display screen is equipped with control switch, display screen and control switch all are connected with control circuit board electricity, and control circuit board is connected with external power supply is electric, control circuit board includes the DSP chip. Through adopting DDS processing module to handle, two way difference frequency signals that can utilize DDS processing module to produce are convenient for sample, through being equipped with gate count module, can realizing the impulse method of adjusting the distance and measure, through be equipped with phase accumulator and low pass filter at DDS processing module, can add up to the signal respectively and carry out the weight filtering to sampled signal.

CN110199202A discloses a common optical-path range finder scope performing laser separation at the front end of an imaging lens, comprising a shell (10), a control module (20), a laser emitter (31), a laser receiver (32), a data display (33), a laser reflection and natural light transmission mirror (41), a concave imaging lens (42), and a red light reflection and natural light transmission mirror (43); an object image hole of the shell (10), the laser reflection and natural light transmission mirror (41), the concave imaging lens (42), the red light reflection and natural light transmission mirror (43), and an observation hole of and the shell (10) are arranged sequentially in a straight line to form a natural light observation optical path; laser light emitted by the laser emitter (31) is reflected by the laser reflection and natural light transmission mirror (41) and then irradiated on a scene to be detected; the reflected laser light is reflected by the laser reflection and natural light transmission mirror (41) and is received by the laser receiver (32); a red light emitted by the data display (33) is reflected by the red light reflection and natural light transmission mirror (43) and imaged on the concave imaging lens (42); and a laser optical path of the laser light emitted by the laser emitter (31) after being reflected by the laser reflection and natural light transmission mirror (41) is coaxial with a natural light observation optical path. Said range finder scope achieves that the range finder scope imaging observation optical path, the laser emitting optical path and the laser reception optical path are a common optical path, and also solves the problems of an existing imaging objective lens rear-end common optical-path range finder scope that the nearest measuring distance is faraway and the blind area is large due to the refraction and reflection of an inner optical path after the laser emitting optical path passes through the imaging objective lens.

CN220137388U relates to a three-laser phase distance measuring device which comprises a laser emitting device, a laser receiving and processing device and a master control device. The reflector path focusing emitting device and the visible light path focusing emitting device are electrically connected with the main control device, and the reflector path focusing emitting device and the visible light path focusing emitting device are adjacently arranged side by side or adjacently perpendicular to each other and are arranged on the same axis; the first optical filter device is arranged on the second side of the outer light path focusing emitting device and the second side of the visible light path focusing emitting device. The laser receiving and processing device comprises a second light filtering device, a receiver, an inner light path focusing and emitting device and a support device, the support device comprises a containing area, the second light filtering device and the inner light path focusing and emitting device are both arranged in the containing area, and the second light filtering device is arranged on the fourth side of the inner light path focusing and emitting device; and the receiver is arranged on the first side of the bracket device and is electrically connected with the main control device, so that the measurement accuracy can be improved.

CN211505878U discloses a laser range finder optical device with accurate measurement. The device comprises a shell, a laser transmitter, a transmitting lens, a receiving lens and a receiving chip, a longitudinally-through transmitting hole is formed in the right side of the shell, a longitudinally-through receiving hole is formed in the left side of the shell, the receiving lens is of an equilateral rectangular structure, and the size of the receiving lens is 9 * 9 mm; the upper outer edge and the lower outer edge of the opening of the transmitting lens cone are respectively provided with a first dispensing fixing port, and the upper outer edge and the lower outer edge of the opening of the receiving lens cone are respectively provided with a second dispensing fixing port. According to the utility model, the laser emitter emits laser to a to-be-measured distance object, and the laser is sensed by the receiving chip through the focusing absorption effect of the emitting lens and the receiving lens, so that the distance between the laser emitter and the to-be-measured distance object is measured, and the measurement is convenient; a 9 * 9mm receiving lens is arranged in the receiving lens barrel, so that the whole volume is small and exquisite, and the carrying is convenient; the openings of the transmitting lens barrel and the receiving lens barrel are respectively provided with a dispensing fixing port, and the assembly is convenient.

### SUMMARY

### 1. Technical problems to be solved

In response to existing technical problems, the present disclosure provides a dual-optical fusion laser rangefinder, which is capable not only of measuring long distances but also ensuring an accuracy up to the millimeter level.

### 2. Technical solution

In order to achieve purpose above, the present disclosure mainly includes the following technical solutions. The invention is set out in the appended set of claims.

A dual-optical fusion laser rangefinder, includes:
a square housing, an optical core assembly, a protective lens, a touch control display module and a button control board;
the optical core assembly and the button control board are located in the square housing;
the protective lens is located at a front end of the square housing, and positioned corresponding to the optical core assembly; and the protective lens is configured to transmit emitted lights and received lights;
the touch control display module is disposed on the square housing and is connected to the button control board;
the button control board is in control connection with the optical core assembly; and
the optical core assembly includes a phase laser ranging optical path unit and a pulse laser ranging optical path unit.

In an embodiment, the optical core assembly includes an optical bracket, a main control board, the phase laser ranging optical path unit and the pulse laser ranging optical path unit;
the optical bracket is disposed on the main control board;
the phase laser ranging optical path unit is located at a right side of the optical bracket;
where the phase laser ranging optical path unit includes: a first optical focusing element, a filter bracket, an optical filter, a phase laser emitter and a phase receiver;
the first optical focusing element is fixed on a position of the main control board, which is located at a right side of a front end of the optical bracket;
the optical filter is fixed in a filter bracket groove defined on the filter bracket, and the filter bracket is pressed into an optical bracket groove defined on the optical bracket;
the phase laser emitter is fixed in a phase laser emitter installment hole defined on the optical bracket;
the phase receiver is attached to a rear end of the optical bracket; and
the phase laser emitter and the phase receiver are in control connection with the main control board.

In an embodiment, the phase laser emitter is configured to emit a laser to a surface to be measured, to thereby enable the surface to be measured to diffusely reflect the laser onto a surface of the first optical focusing element; the first optical focusing element is configured to focus the laser and transmit the laser to the optical filter; and the phase receiver is configured to receive the laser penetrating the optical filter, transform the laser to an electrical signal, and transmit the electrical signal to the main control board for controlling.

In an embodiment, the phase laser emitter is configured to emit visible green lights with wavelengths in a range of 500 nanometer (nm) to 535 nm or visible red lights with wavelengths in a range of 630 nm to 670 nm; and a wavelength of the optical filter is in a range of 500 nm to 535 nm or in a range of 630 nm to 670 nm

In an embodiment, the pulse laser ranging optical path unit is located at a left side of the optical bracket;
the pulse laser ranging optical path unit includes: a pulse laser emitter, a reflection mirror, a pulse receiver, a second optical focusing element and a pulse receiver;
the second optical focusing element is fixed on a position of the main control board, which is located at a left side of the front end of the optical bracket;
the pulse laser emitter is fixed in a pulse laser emitter installment hole defined on the optical bracket;
the reflection mirror is fixed on a 45-degree inclined edge of the optical bracket; and
the pulse receiver is fixed on the left side of the optical bracket.

In an embodiment, the pulse laser emitter is configured to emit a laser to the surface to be measured, to thereby enable the surface to be measured to diffusely reflect the laser onto a surface of the second optical focusing element; the second optical focusing element is configured to focus the laser and transmit the laser to the reflection mirror; the reflection mirror is configured to reflect the laser at a 45-degree angle onto a surface of the pulse receiver; and the pulse receiver is configured to transform the laser to an electrical signal and transmit the electrical signal to the main control board for controlling; and
the pulse laser emitter is configured to emit invisible lights with a wavelength of 905 nm.

In an embodiment, a camera is provided on an edge of the optical bracket, which is closed to the phase laser emitter when a ranging distance is long;
the camera is capable of capturing laser points with long distances; and
an inner light knob adjustment valve and an inner laser tube are arranged on the optical bracket.

In an embodiment, the protective lens defines a pulse reception transparent area, a pulse emission transparent area, a phase emission transparent area, a camera transparent and a phase reception transparent area.

In an embodiment, the square housing includes: a bottom shell, a front shell, a metal cover and a universal serial bus (USB) protective cover;
the optical core assembly is fixed in the bottom shell through optical core assembly lock screws;
the button control board is fixed in the front shell through button control board lock screws;
the metal cover is fixed on a rear end of the front shell through screws;
the USB protective cover is fixed on the metal cover fixed on the rear end of the front shell;
the touch control display module is fixed on a surface of the front shell; and
the protective lens is fixed on a front end of the front shell.

In an embodiment, the dual-optical fusion laser rangefinder further includes a lithium (Li) battery; and the lithium battery is fixed on the main control board and is configured to provide a power source for the optical core assembly and the touch control display module.

### 3. Beneficial effects

The dual-optical fusion laser rangefinder provided by the present disclosure has the following beneficial effects.

This rangefinder is capable of integrating pulse laser ranging and phase laser ranging optics, ensuring the ability to measure distances from 0.2 m to 5000 m on a single device. It also guarantees that the accuracy reaches the millimeter level within 200 m. Particularly in terms of structure, by integrating the two optical systems, the product's volume is compact, providing users with an enhanced experience.

### BRIEF DESCRIPTION OF DRAWINGS

FIG. 1 illustrates an exploded view of an overall structure of the dual-optical fusion rangefinder of the present disclosure.
FIG. 2 illustrates a schematic structural diagram of a protective lens of the dual-optical fusion rangefinder of the present disclosure.
FIG. 3 illustrates a schematic structural diagram of a shell of the dual-optical fusion rangefinder of the present disclosure.
FIG. 4 illustrates a schematic structural diagram of an optical core assembly of the dual-optical fusion rangefinder of the present disclosure.

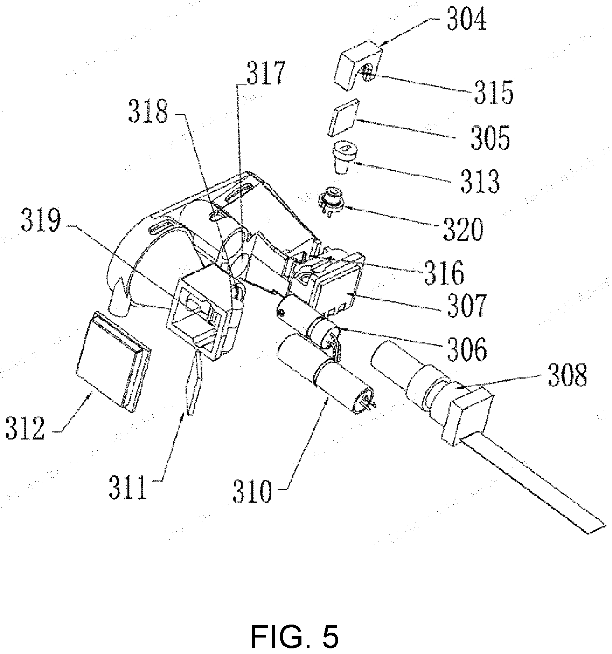

FIG. 5 illustrates a schematic structural diagram of the optical core assembly without a main control board of the dual-optical fusion rangefinder of the present disclosure.

### DETAILED DESCRIPTION OF EMBODIMENTS

In order to better explain the present disclosure for the purpose of understanding, the present disclosure is described in detail through specific embodiments with reference to the accompanying drawings.

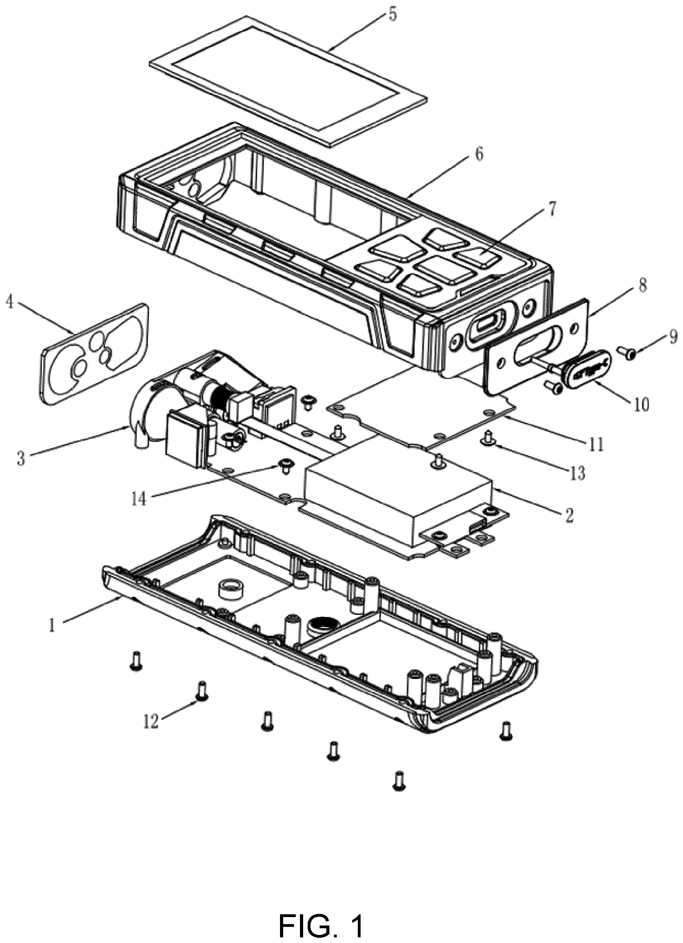

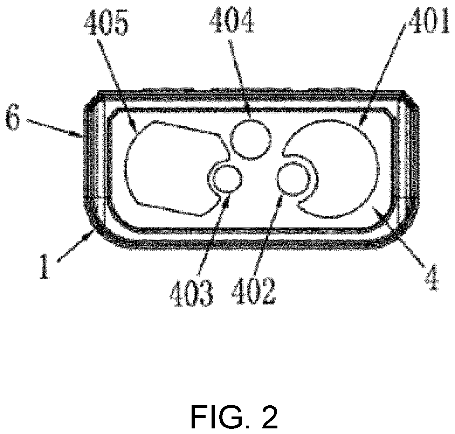

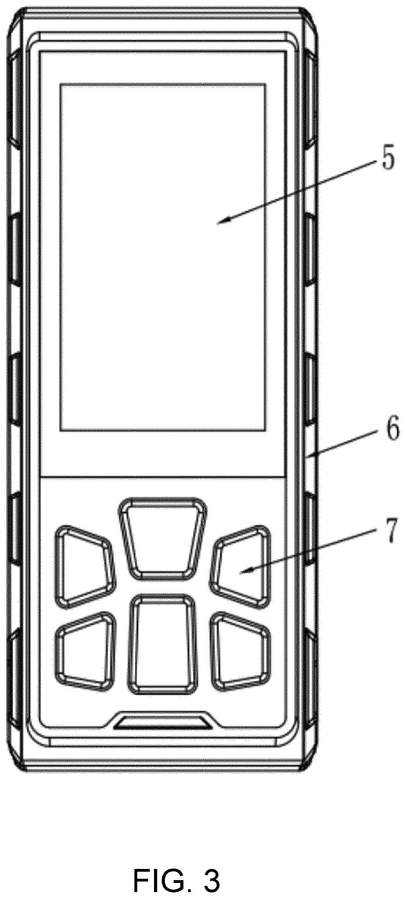

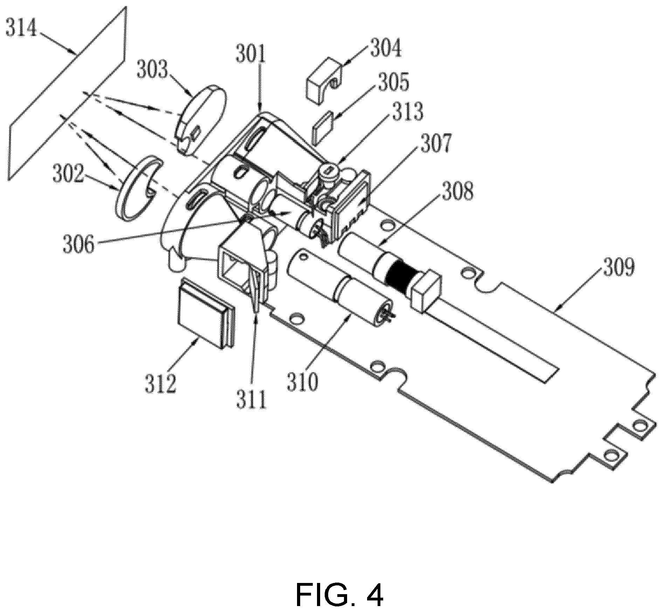

As illustrated in FIG. 1 to FIG. 4, an embodiment provides a dual-optical fusion laser rangefinder, including a square housing, an optical core assembly 3, a protective lens 4, a touch control display module 5 and a button control board 11.

Specifically, the optical core assembly 3 and the button control board 11 are located in the square housing. The protective lens 4 is located at a front end of the square housing and positioned corresponding to the optical core assembly 3. The protective lens 4 is configured to transmit emitted lights and received lights. The touch control display module 5 is disposed on the square housing and is connected to the button control board 11, and the touch control display module 5 may include a touch control display screen (also referred to as touch control display panel or touch display panel). The button control board 11 is in control connection with the optical core assembly 3. The optical core assembly includes a phase laser ranging optical path unit and a pulse laser ranging optical path unit.

This rangefinder is capable of integrating pulse laser ranging and phase laser ranging optics, ensuring the ability to measure distances from 0.2 m to 5000 m on a single device. It also guarantees that the accuracy reaches the millimeter level within 200 m. Particularly in terms of structure, by integrating the two optical systems, the product's volume is compact, providing users with an enhanced experience.

The optical core assembly of the embodiment includes an optical bracket 301, a main control board 309, the phase laser ranging optical path unit and the pulse laser ranging optical path unit.

The optical bracket 301 is disposed on the main control board 309. The phase laser ranging optical path unit is located at a right side of the optical bracket 301.

In the embodiment, the phase laser ranging optical path unit includes: a first optical focusing element 303, a filter bracket 304, an optical filter 305, a phase laser emitter 306 and a phase receiver 307. The first optical focusing element 303 is fixed on a position of the main control board 309, which is located at a right side of a front end of the optical bracket 301. The optical filter 305 is fixed in a filter bracket groove 315 defined on the filter bracket 304, and the filter bracket 304 is pressed into an optical bracket groove 316 defined on the optical bracket 301. The phase laser emitter 306 is fixed in a phase laser emitter installment hole 317 defined on the optical bracket 301. The phase receiver 307 is attached to a rear end of the optical bracket 301. The phase laser emitter 306 and the phase receiver 307 are in control connection with the main control board 309.

In the embodiment, the phase laser emitter 306 emits a laser to a surface to be measured 314, the surface to be measured 314 diffusely reflects the laser onto a surface of the first optical focusing element 303, the first optical focusing element 303 focuses the laser and then transmits the laser to the optical filter 305, the laser penetrates the optical filter 305, and is received and transformed to an electrical signal by the phase receiver 307, and the electrical signal is transmitted to the main control board 309 for controlling. The phase laser emitter 306 is configured to emit visible green lights with wavelengths in a range of 500 nm to 535 nm or visible red lights with wavelengths in a range of 630 nm to 670 nm. A wavelength of the optical filter 305 is in a range of 500 nm to 535 nm or in a range of 630 nm to 670 nm.

In the embodiment, the pulse laser ranging optical path unit is located at a left side of the optical bracket 301. The pulse laser ranging optical path unit includes: a pulse laser emitter 310, a reflection mirror 311, a second optical focusing element 302 and a pulse receiver 312. The second optical focusing element 302 is fixed on a position of the main control board 309, which is located at a left side of the front end of the optical bracket 301. The pulse laser emitter 310 is fixed in a pulse laser emitter installment hole 318 defined on the optical bracket 301. The reflection mirror 311 is fixed on a 45-degree inclined edge 319 of the optical bracket 301. The pulse receiver 312 is fixed on the left side of the optical bracket 301.

The pulse laser emitter 310 emits a laser to the surface to be measured 314, the surface to be measured 314 diffusely reflects the laser onto a surface of the second optical focusing element 302, the second optical focusing element 302 focuses the laser and transmit the laser to the reflection mirror 311. The laser is reflected at a 45-degree angle by the reflection mirror 311 onto a surface of the pulse receiver 312. At last the laser is received and transformed to an electrical signal by the pulse receiver 312 and the electrical signal is transmitted to the main control board 309 for controlling. The pulse laser emitter 310 is configured to emit invisible lights with a wavelength of 905 nm.

In practical application, a camera 308 is provided on an edge of the optical bracket 301, which is closed to the phase laser emitter 306 when a ranging distance is long. The camera 308 is capable of capturing laser points with long distances. An inner light knob adjustment valve 313 and an inner laser tube 320 are arranged on the optical bracket 301. The inner light knob adjustment valve 313 is configured to control luminous flux from the inner laser tube 320 to the phase receiver 307. Through controlling the luminous flux from the inner laser tube 320 to the phase receiver 307 and combinations of the inner laser tube 320, the inner light knob adjustment valve 313 and the optical filter 305, a maximum range of the phase laser ranging optical path unit is improved to 200 m and an accuracy of the phase laser ranging optical path unit is controlled at the millimeter level.

In the embodiment, the protective lens 4 defines a pulse reception transparent area 401, a pulse emission transparent area 402, a phase emission transparent area 403, a camera transparent area 404 and a phase reception transparent area 405.

The square housing includes: a bottom shell 1, a front shell 6, a metal cover 8 and a USB protective cover 10. The optical core assembly 3 is fixed in the bottom shell 1 through optical core assembly lock screws 14. The button control board 11 is fixed in the front shell 6 through button control board lock screws 13. The metal cover 8 is fixed on a rear end of the front shell 6 through screws 9. The USB protective cover 10 is fixed on the metal cover 8 fixed on the rear end of the front shell 6. The touch control display module 5 is fixed on a surface of the front shell 6. The protective lens 4 is fixed on a front end of the front shell 6. The bottom shell 1 is connected to the front shell 6 through bottom shell lock screws 12.

The dual-optical fusion laser rangefinder provided by the present disclosure further includes: a lithium battery 2. The lithium battery 2 is fixed on the main control board 309 and is configured to provide power for the optical core assembly 3 and the touch control display module 5.

Finally, it should be noted that the optical core assembly 3 is configured to measure values, the touch control display module 5 is configured to display the values measured by the optical core assembly 3. The touch control display module 5 is equipped with touch functionality. Buttons 7 are configured to turn on and off the optical core module 3 and control the measurement of the optical core assembly 3.

### reference list

- 1: bottom shell
- 2: lithium battery
- 3: optical core assembly
- 301: optical bracket
- 302: second optical focusing element
- 303: first optical focusing element
- 304: filter bracket;
- 305: optical filter
- 306: phase laser emitter
- 307: phase receiver
- 308: camera
- 309: main control board
- 310: pulse laser emitter
- 311: reflection mirror
- 312: pulse receiver
- 313: inner light knob adjustment valve
- 314: surface to be measured
- 315: filter bracket groove
- 316: optical bracket groove
- 317: phase laser emitter installment hole
- 318: pulse laser emitter installment hole
- 319: 45-degree inclined edge
- 320: inner laser tube
- 4: protective lens
- 401: pulse reception transparent area
- 402: pulse emission transparent area
- 403: phase emission transparent area
- 404: camera transparent area
- 405: phase reception transparent area
- 5: touch control display module
- 6: front shell
- 7: button
- 8: metal cover
- 9: screw
- 10: USB protective cover
- 11: button control board
- 12: bottom shell lock screw
- 13: button control board lock screw
- 14: optical core assembly lock screw

## Claims

1. A dual-optical fusion laser rangefinder, comprising:
a housing, an optical core assembly (3), a protective lens (4), a touch control display module (5) and a button control board (11); wherein
the optical core assembly (3) and the button control board (11) are located in the housing;
the protective lens (4) is located at a front end of the housing, and positioned corresponding to the optical core assembly (3); and the protective lens (4) is configured to transmit emitted lights and received lights;
the touch control display module (5) is disposed on the housing and is connected to the button control board (11);
the button control board (11) is in control connection with the optical core assembly (3); and
**characterized in that**:
the optical core assembly (3) comprises an optical bracket (301), a main control board (309), a phase laser ranging optical path unit, and a pulse laser ranging optical path unit; the optical bracket (301) is disposed on the main control board (309); and the phase laser ranging optical path unit and the pulse laser ranging optical path unit are disposed on the optical bracket (301) and are arranged side-by-side along a width direction of the optical bracket (301);
the phase laser ranging optical path unit comprises: a first optical focusing element (303), a filter bracket (304), an optical filter (305), a phase laser emitter (306) and a phase receiver (307); the first optical focusing element (303) is fixed on the main control board (309) at an end of the optical bracket (301) facing towards a surface to be measured (314); the optical filter (305) is fixed in a filter bracket groove (315) defined on the filter bracket (304), and the filter bracket (304) is pressed into an optical bracket groove (316) defined on the optical bracket (301); the phase laser emitter (306) is fixed in a phase laser emitter installment hole (317) defined on the optical bracket (301); the phase receiver (307) is attached to an end of the optical bracket (301) that is facing away from the surface to be measured (314); and the phase laser emitter (306) and the phase receiver (307) are in control connection with the main control board (309);
the pulse laser ranging optical path unit comprises: a pulse laser emitter (310), a reflection mirror (311), a second optical focusing element (302) and a pulse receiver (312); the second optical focusing element (302) is fixed on the main control board (309) at the end of the optical bracket (301) facing towards the surface to be measured (314); the pulse laser emitter (310) is fixed in a pulse laser emitter installment hole (318) defined on the optical bracket (301); the reflection mirror (311) is fixed on a 45-degree inclined edge (319) of the optical bracket (301); and the pulse receiver (312) is fixed on the optical bracket (301); and
the optical core assembly (3) further comprises a light adjustable element (313) and an inner laser tube (320) disposed on the optical bracket (301), and the light adjustable element (313) is configured to control luminous flux from the inner laser tube (320) to the phase receiver (307).

2. The dual-optical fusion laser rangefinder as claimed in claim 1, wherein the phase laser emitter (306) is configured to emit the laser to a surface to be measured (314), to thereby enable the surface to be measured (314) to diffusely reflect the laser onto a surface of the first optical focusing element (303); the first optical focusing element (303) is configured to focus the laser and transmit the laser to the optical filter (305); and the phase receiver (307) is configured to receive the laser penetrating the optical filter (305), transform the laser to an electrical signal, and transmit the electrical signal to the main control board (309) for controlling.

3. The dual-optical fusion laser rangefinder as claimed in claim 2, wherein
the phase laser emitter (306) is configured to emit visible green lights with wavelengths in a range of 500 nanometer (nm) to 535 nm or visible red lights with wavelengths in a range of 630 nm to 670 nm; and
a wavelength of the optical filter (305) is in a range of 500 nm to 535 nm or in a range of 630 nm to 670 nm.

4. The dual-optical fusion laser rangefinder as claimed in claim 1, wherein the pulse laser emitter (310) is configured to emit a laser to the surface to be measured (314), to thereby enable the surface to be measured (314) to diffusely reflect the laser onto a surface of the second optical focusing element (302); the second optical focusing element (302) is configured to focus the laser and transmit the laser to the reflection mirror (311); the reflection mirror (311) is configured to reflect the laser at a 45-degree angle onto a surface of the pulse receiver (312); and the pulse receiver (312) is configured to transform the laser to an electrical signal and transmit the electrical signal to the main control board (309) for controlling; and
the pulse laser emitter (310) is configured to emit invisible lights with a wavelength of 905 nm.

5. The dual-optical fusion laser rangefinder as claimed in one of claims 1 to 4, wherein
a camera (308) is provided on an edge of the optical bracket (301) adjacent to the phase laser emitter (306) when a ranging distance is in a range of 10 meter (m) to 5000 m;
the camera (308) is configured to capture laser points from targets at distances in a range of 10 m to 5000 m.

6. The dual-optical fusion laser rangefinder as claimed in claim 1, wherein
the protective lens (4) defines a pulse reception transparent area (401), a pulse emission transparent area (402), a phase emission transparent area (403), a camera transparent area (404) and a phase reception transparent area (405).

7. The dual-optical fusion laser rangefinder as claimed in one of the proceeding claims, wherein
the housing comprises: a bottom shell (1), a front shell (6), a metal cover (8) and a universal serial bus (USB) protective cover;
the optical core assembly (3) is fixed in the bottom shell (1) through optical core assembly (3) lock screws;
the button control board (11) is fixed in the front shell (6) through button control board (11) lock screws;
the metal cover (8) is fixed on a rear end of the front shell (6) through screws;
the USB protective cover (10) is fixed on the metal cover (8) fixed on the rear end of the front shell (6);
the touch control display module (5) is fixed on a surface of the front shell (6); and
the protective lens (4) is fixed on a front end of the front shell (6).

8. The dual-optical fusion laser rangefinder as claimed in one of the proceeding claims, wherein the dual-optical fusion laser rangefinder further comprises a lithium battery (2); and
the lithium battery (2) is fixed on the main control board (309) and is configured to provide power for the optical core assembly (3) and the touch control display module (5).

## Patentansprüche

1. Dual-Optik-Fusionslaser-Entfernungsmesser, umfassend:
ein Gehäuse, eine optische Kerneinheit (3), eine Schutzlinse (4), ein Touch-Control-Displaymodul (5) und eine Tastensteuerplatine (11); wobei
die optische Kerneinheit (3) und die Tastensteuerplatine (11) in dem Gehäuse angeordnet sind;
die Schutzlinse (4) an einem vorderen Ende des Gehäuses angeordnet und der optischen Kerneinheit (3) entsprechend positioniert ist; und die Schutzlinse (4) dazu konfiguriert ist, ausgesendete Lichtstrahlen und empfangene Lichtstrahlen durchzulassen;
das Touch-Control-Displaymodul (5) an dem Gehäuse angeordnet und mit der Tastensteuerplatine (11) verbunden ist;
die Tastensteuerplatine (11) mit der optischen Kerneinheit (3) in Steuerverbindung steht; und
**dadurch gekennzeichnet, dass**:
die optische Kerneinheit (3) einen optischen Halter (301), eine Hauptsteuerplatine (309), eine Phasenlaser-Entfernungsmessoptikeinheit und eine Pulslaser-Entfernungsmessoptikeinheit umfasst; der optische Halter (301) auf der Hauptsteuerplatine (309) angeordnet ist; und die Phasenlaser-Entfernungsmessoptikeinheit und die Pulslaser-Entfernungsmessoptikeinheit auf dem optischen Halter (301) angeordnet und entlang einer Breitenrichtung des optischen Halters (301) nebeneinander angeordnet sind;
die Phasenlaser-Entfernungsmessoptikeinheit umfasst: ein erstes optisches Fokussierelement (303), einen Filterhalter (304), ein optisches Filter (305), einen Phasenlaseremitter (306) und einen Phasenempfänger (307); das erste optische Fokussierelement (303) ist auf der Hauptsteuerplatine (309) an einem Ende des optischen Halters (301), das einer zu messenden Oberfläche (314) zugewandt ist, befestigt; das optische Filter (305) ist in einer Filterhalternut (315), die an dem Filterhalter (304) ausgebildet ist, befestigt, und der Filterhalter (304) ist in eine optische Halternut (316), die an dem optischen Halter (301) ausgebildet ist, eingepresst; der Phasenlaseremitter (306) ist in einer Phasenlaseremitter-Einbaubohrung (317), die an dem optischen Halter (301) ausgebildet ist, befestigt; der Phasenempfänger (307) ist an einem Ende des optischen Halters (301), das von der zu messenden Oberfläche (314) abgewandt ist, angebracht; und der Phasenlaseremitter (306) und der Phasenempfänger (307) stehen mit der Hauptsteuerplatine (309) in Steuerverbindung;
die Pulslaser-Entfernungsmessoptikeinheit umfasst: einen Pulslaseremitter (310), einen Reflexionsspiegel (311), ein zweites optisches Fokussierelement (302) und einen Pulsempfänger (312); das zweite optische Fokussierelement (302) ist auf der Hauptsteuerplatine (309) an dem Ende des optischen Halters (301), das der zu messenden Oberfläche (314) zugewandt ist, befestigt; der Pulslaseremitter (310) ist in einer Pulslaseremitter-Einbaubohrung (318), die an dem optischen Halter (301) ausgebildet ist, befestigt; der Reflexionsspiegel (311) ist an einer 45-Grad-Schrägkante (319) des optischen Halters (301) befestigt; und der Pulsempfänger (312) ist auf dem optischen Halter (301) befestigt; und
die optische Kerneinheit (3) ferner ein Lichtjustierelement (313) und eine innere Laserröhre (320) umfasst, die auf dem optischen Halter (301) angeordnet sind, und das Lichtjustierelement (313) dazu konfiguriert ist, den Lichtstrom von der inneren Laserröhre (320) zu dem Phasenempfänger (307) zu steuern.

2. Dual-Optik-Fusionslaser-Entfernungsmesser nach Anspruch 1, wobei der Phasenlaseremitter (306) dazu konfiguriert ist, den Laser auf eine zu messende Oberfläche (314) zu emittieren, um dadurch zu ermöglichen, dass die zu messende Oberfläche (314) den Laser diffus auf eine Oberfläche des ersten optischen Fokussierelements (303) reflektiert; das erste optische Fokussierelement (303) dazu konfiguriert ist, den Laser zu fokussieren und den Laser zu dem optischen Filter (305) zu übertragen; und der Phasenempfänger (307) dazu konfiguriert ist, den das optische Filter (305) durchdringenden Laser zu empfangen, den Laser in ein elektrisches Signal umzuwandeln und das elektrische Signal zur Steuerung an die Hauptsteuerplatine (309) zu übertragen.

3. Dual-Optik-Fusionslaser-Entfernungsmesser nach Anspruch 2, wobei
der Phasenlaseremitter (306) dazu konfiguriert ist, sichtbares grünes Licht mit Wellenlängen in einem Bereich von 500 Nanometer (nm) bis 535 nm oder sichtbares rotes Licht mit Wellenlängen in einem Bereich von 630 nm bis 670 nm zu emittieren; und
eine Wellenlänge des optischen Filters (305) in einem Bereich von 500 nm bis 535 nm oder in einem Bereich von 630 nm bis 670 nm liegt.

4. Dual-Optik-Fusionslaser-Entfernungsmesser nach Anspruch 1, wobei der Pulslaseremitter (310) dazu konfiguriert ist, einen Laser auf die zu messende Oberfläche (314) zu emittieren, um dadurch zu ermöglichen, dass die zu messende Oberfläche (314) den Laser diffus auf eine Oberfläche des zweiten optischen Fokussierelements (302) reflektiert; das zweite optische Fokussierelement (302) dazu konfiguriert ist, den Laser zu fokussieren und den Laser zu dem Reflexionsspiegel (311) zu übertragen; der Reflexionsspiegel (311) dazu konfiguriert ist, den Laser unter einem 45-Grad-Winkel auf eine Oberfläche des Pulsempfängers (312) zu reflektieren; und der Pulsempfänger (312) dazu konfiguriert ist, den Laser in ein elektrisches Signal umzuwandeln und das elektrische Signal zur Steuerung an die Hauptsteuerplatine (309) zu übertragen; und
der Pulslaseremitter (310) dazu konfiguriert ist, unsichtbares Licht mit einer Wellenlänge von 905 nm zu emittieren.

5. Dual-Optik-Fusionslaser-Entfernungsmesser nach einem der Ansprüche 1 bis 4, wobei
eine Kamera (308) an einem Rand des optischen Halters (301) benachbart zu dem Phasenlaseremitter (306) vorgesehen ist, wenn eine Entfernungsmessdistanz in einem Bereich von 10 Meter (m) bis 5000 m liegt;
die Kamera (308) dazu konfiguriert ist, Laserpunkte von Zielen in Distanzen in einem Bereich von 10 m bis 5000 m zu erfassen.

6. Dual-Optik-Fusionslaser-Entfernungsmesser nach Anspruch 1, wobei
die Schutzlinse (4) einen Pulsempfangs-Transparenzbereich (401), einen Pulsemissions-Transparenzbereich (402), einen Phasenemissions-Transparenzbereich (403), einen Kamera-Transparenzbereich (404) und einen Phasenempfangs-Transparenzbereich (405) definiert.

7. Dual-Optik-Fusionslaser-Entfernungsmesser nach einem der vorhergehenden Ansprüche, wobei
das Gehäuse umfasst: eine Unterschale (1), eine Vorderschale (6), eine Metallabdeckung (8) und eine USB-Schutzabdeckung;
die optische Kerneinheit (3) in der Unterschale (1) durch Befestigungsschrauben der optischen Kerneinheit (3) befestigt ist;
die Tastensteuerplatine (11) in der Vorderschale (6) durch Befestigungsschrauben der Tastensteuerplatine (11) befestigt ist;
die Metallabdeckung (8) an einem hinteren Ende der Vorderschale (6) durch Schrauben befestigt ist;
die USB-Schutzabdeckung (10) an der an dem hinteren Ende der Vorderschale (6) befestigten Metallabdeckung (8) befestigt ist;
das Touch-Control-Displaymodul (5) auf einer Oberfläche der Vorderschale (6) befestigt ist; und
die Schutzlinse (4) an einem vorderen Ende der Vorderschale (6) befestigt ist.

8. Dual-Optik-Fusionslaser-Entfernungsmesser nach einem der vorhergehenden Ansprüche, wobei der Dual-Optik-Fusionslaser-Entfernungsmesser ferner eine Lithiumbatterie (2) umfasst; und
die Lithiumbatterie (2) auf der Hauptsteuerplatine (309) befestigt und dazu konfiguriert ist, die optische Kerneinheit (3) und das Touch-Control-Displaymodul (5) mit Strom zu versorgen.

## Revendications

1. Télémètre laser à fusion double optique, comprenant :
un boîtier, un ensemble noyau optique (3), une lentille de protection (4), un module d'affichage tactile (5) et une carte de commande à boutons (11) ; dans lequel
l'ensemble noyau optique (3) et la carte de commande à boutons (11) sont situés dans le boîtier ;
la lentille de protection (4) est située à une extrémité avant du boîtier et positionnée en correspondance avec l'ensemble noyau optique (3) ; et la lentille de protection (4) est configurée pour transmettre les lumières émises et les lumières reçues ;
le module d'affichage tactile (5) est disposé sur le boîtier et est connecté à la carte de commande à boutons (11) ;
la carte de commande à boutons (11) est en liaison de commande avec l'ensemble noyau optique (3) ; et
**caractérisé en ce que**:
l'ensemble noyau optique (3) comprend un support optique (301), une carte de commande principale (309), une unité de chemin optique de télémétrie laser à phase et une unité de chemin optique de télémétrie laser à impulsions ; le support optique (301) est disposé sur la carte de commande principale (309) ; et l'unité de chemin optique de télémétrie laser à phase et l'unité de chemin optique de télémétrie laser à impulsions sont disposées sur le support optique (301) et sont agencées côte à côte le long d'une direction de largeur du support optique (301) ;
l'unité de chemin optique de télémétrie laser à phase comprend : un premier élément de focalisation optique (303), un support de filtre (304), un filtre optique (305), un émetteur laser à phase (306) et un récepteur à phase (307) ; le premier élément de focalisation optique (303) est fixé sur la carte de commande principale (309) à une extrémité du support optique (301) tournée vers une surface à mesurer (314) ; le filtre optique (305) est fixé dans une rainure de support de filtre (315) définie sur le support de filtre (304), et le support de filtre (304) est enfoncé dans une rainure de support optique (316) définie sur le support optique (301) ; l'émetteur laser à phase (306) est fixé dans un trou de montage d'émetteur laser à phase (317) défini sur le support optique (301) ; le récepteur à phase (307) est fixé à une extrémité du support optique (301) tournée à l'opposé de la surface à mesurer (314) ; et l'émetteur laser à phase (306) et le récepteur à phase (307) sont en liaison de commande avec la carte de commande principale (309) ;
l'unité de chemin optique de télémétrie laser à impulsions comprend : un émetteur laser à impulsions (310), un miroir de réflexion (311), un second élément de focalisation optique (302) et un récepteur à impulsions (312) ; le second élément de focalisation optique (302) est fixé sur la carte de commande principale (309) à l'extrémité du support optique (301) tournée vers la surface à mesurer (314) ; l'émetteur laser à impulsions (310) est fixé dans un trou de montage d'émetteur laser à impulsions (318) défini sur le support optique (301) ; le miroir de réflexion (311) est fixé sur un bord incliné à 45 degrés (319) du support optique (301) ; et le récepteur à impulsions (312) est fixé sur le support optique (301) ; et
l'ensemble noyau optique (3) comprend en outre un élément de réglage de lumière (313) et un tube laser interne (320) disposés sur le support optique (301), et l'élément de réglage de lumière (313) est configuré pour commander le flux lumineux provenant du tube laser interne (320) vers le récepteur à phase (307).

2. Télémètre laser à fusion double optique selon la revendication 1, dans lequel l'émetteur laser à phase (306) est configuré pour émettre le laser vers une surface à mesurer (314), pour permettre ainsi à la surface à mesurer (314) de réfléchir de manière diffuse le laser sur une surface du premier élément de focalisation optique (303) ; le premier élément de focalisation optique (303) est configuré pour focaliser le laser et transmettre le laser au filtre optique (305) ; et le récepteur à phase (307) est configuré pour recevoir le laser traversant le filtre optique (305), transformer le laser en un signal électrique et transmettre le signal électrique à la carte de commande principale (309) pour commande.

3. Télémètre laser à fusion double optique selon la revendication 2, dans lequel
l'émetteur laser à phase (306) est configuré pour émettre des lumières vertes visibles ayant des longueurs d'onde dans une plage de 500 nanomètres (nm) à 535 nm ou des lumières rouges visibles ayant des longueurs d'onde dans une plage de 630 nm à 670 nm ; et
une longueur d'onde du filtre optique (305) est dans une plage de 500 nm à 535 nm ou dans une plage de 630 nm à 670 nm.

4. Télémètre laser à fusion double optique selon la revendication 1, dans lequel l'émetteur laser à impulsions (310) est configuré pour émettre un laser vers la surface à mesurer (314), pour permettre ainsi à la surface à mesurer (314) de réfléchir de manière diffuse le laser sur une surface du second élément de focalisation optique (302) ; le second élément de focalisation optique (302) est configuré pour focaliser le laser et transmettre le laser au miroir de réflexion (311) ; le miroir de réflexion (311) est configuré pour réfléchir le laser sous un angle de 45 degrés sur une surface du récepteur à impulsions (312) ; et le récepteur à impulsions (312) est configuré pour transformer le laser en un signal électrique et transmettre le signal électrique à la carte de commande principale (309) pour commande ; et
l'émetteur laser à impulsions (310) est configuré pour émettre des lumières invisibles ayant une longueur d'onde de 905 nm.

5. Télémètre laser à fusion double optique selon l'une quelconque des revendications 1 à 4, dans lequel
une caméra (308) est prévue sur un bord du support optique (301) adjacent à l'émetteur laser à phase (306) lorsqu'une distance de télémétrie est dans une plage de 10 mètres (m) à 5000 m ;
la caméra (308) est configurée pour capturer des points laser provenant de cibles à des distances dans une plage de 10 m à 5000 m.

6. Télémètre laser à fusion double optique selon la revendication 1, dans lequel
la lentille de protection (4) définit une zone transparente de réception d'impulsions (401), une zone transparente d'émission d'impulsions (402), une zone transparente d'émission de phase (403), une zone transparente de caméra (404) et une zone transparente de réception de phase (405).

7. Télémètre laser à fusion double optique selon l'une quelconque des revendications précédentes, dans lequel
le boîtier comprend : un boîtier inférieur (1), un boîtier avant (6), un couvercle métallique (8) et un cache de protection USB;
l'ensemble noyau optique (3) est fixé dans le boîtier inférieur (1) par des vis de fixation de l'ensemble noyau optique (3);
la carte de commande à boutons (11) est fixée dans le boîtier avant (6) par des vis de fixation de la carte de commande à boutons (11);
le couvercle métallique (8) est fixé sur une extrémité arrière du boîtier avant (6) par des vis;
le cache de protection USB (10) est fixé sur le couvercle métallique (8) fixé sur l'extrémité arrière du boîtier avant (6);
le module d'affichage tactile (5) est fixé sur une surface du boîtier avant (6) ; et
la lentille de protection (4) est fixée sur une extrémité avant du boîtier avant (6).

8. Télémètre laser à fusion double optique selon l'une quelconque des revendications précédentes, dans lequel le télémètre laser à fusion double optique comprend en outre une batterie au lithium (2) ; et
la batterie au lithium (2) est fixée sur la carte de commande principale (309) et est configurée pour fournir de l'énergie à l'ensemble noyau optique (3) et au module d'affichage tactile (5).
